# EUROPEAN PATENT APPLICATION

(11) **EP 4 489 331 A1**
(43) Date of publication of application: **08.01.2025**
(21) Application number: 23759736.4
(22) Date of filing: 10.02.2023
(51) Int. Cl.: H04B 17/318, G01S 13/56, G06F 3/01, G06F 3/16

(54) **PERSON DETECTING SYSTEM, UTTERANCE SYSTEM, AND PERSON DETECTING METHOD**

(30) Priority: 28.02.2022 JP 2022029364
(71) Applicant: Panasonic Intellectual Property Management Co., Ltd., Osaka 571-0057 (JP)
(72) Inventor: HIGUCHI, Seiya, Kadoma-shi, Osaka 571-0057 (JP); ISHII, Masahiro, Kadoma-shi, Osaka 571-0057 (JP); URABE, Hiroki, Kadoma-shi, Osaka 571-0057 (JP)
(74) Representative: Novagraaf International SA
(86) International application number: PCT/JP2023/004657
(87) International publication number: WO 2023/162732

(57) **Abstract**

A person detection system (1A) includes an obtainer (11) and a processing unit (12). The obtainer (11) obtains a signal strength of a radio wave transmitted by each of a plurality of transmitters (3) and received by an antenna (21). The processing unit (12) performs a detection process of detecting whether a person is present in a vicinity of the antenna (21), based on the signal strengths obtained by the obtainer (11). Each of the plurality of transmitters (3) is classified into any one of a plurality of groups according to a position of the transmitter (3) with respect to the antenna (21). In the detection process, the processing unit (12) detects that a person is present in the vicinity of the antenna (21) when each of the signal strengths obtained by the obtainer (11) regarding, among the plurality of transmitters (3), two or more transmitters (3) deviates from a normal range.

## Description

### [Technical Field]

The present disclosure relates to a person detection system, an utterance system, and a person detection method that detect whether a person is present.

### [Background Art]

Patent Literature (PTL) 1 discloses a system for presence detection. In the system, data indicative of signal strength associated with radio frequency (RF) signals received by one or more devices communicating via a wireless communications protocol is monitored. Moreover, in the system, presence of at least one person in the vicinity of the one or more devices is determined based on a comparison of the data monitored to a baseline signal strength profile.

### [Citation List]

### [Patent Literature]

[PTL 1] U.S. Patent No. 11151850

### [Summary of Invention]

### [Technical Problem]

The present disclosure provides a person detection system or the like that can detect whether a person is present without preparing an additional device.

### [Solution to Problem]

A person detection system according to an aspect of the present disclosure includes an obtainer and a processing unit. The obtainer obtains a signal strength of a radio wave transmitted by each of a plurality of transmitters and received by an antenna. The processing unit performs a detection process of detecting whether a person is present in a vicinity of the antenna, based on the signal strengths obtained by the obtainer. Each of the plurality of transmitters is classified into any one of a plurality of groups according to a position of the transmitter with respect to the antenna. In the detection process, the processing unit detects that the person is present in the vicinity of the antenna when each of the signal strengths obtained by the obtainer regarding, among the plurality of transmitters, two or more transmitters classified into a same group among the plurality of groups deviates from a normal range.

A person detection system according to an aspect of the present disclosure includes an obtainer and a processing unit. The obtainer obtains a signal strength of a radio wave transmitted by each of a plurality of transmitters and received by an antenna. The processing unit performs a detection process of detecting whether a person is present in a vicinity of the antenna, based on the signal strengths obtained by the obtainer. In the detection process, the processing unit detects that the person is present in the vicinity of the antenna when each of the signal strengths obtained by the obtainer regarding, among the plurality of transmitters, two or more transmitters deviates from a normal range.

An utterance system according to an aspect of the present disclosure includes the person detection system, the antenna, a voice outputter that outputs voice, and a controller. The controller causes the voice outputter to output the voice when the person detection system detects that the person is present in the vicinity of the antenna.

A person detection method according to an aspect of the present disclosure obtains a signal strength of a radio wave transmitted by each of a plurality of transmitters and received by an antenna. The person detection method performs a detection process of detecting whether a person is present in a vicinity of the antenna, based on the signal strengths obtained. Each of the plurality of transmitters is classified into any one of a plurality of groups according to a position of the transmitter with respect to the antenna. In the detection process, the person detection method detects that the person is present in the vicinity of the antenna when each of the signal strengths obtained by the obtainer regarding, among the plurality of transmitters, two or more transmitters classified into a same group among the plurality of groups deviates from a normal range.

A program according to an aspect of the present disclosure causes one or more processors to execute the person detection method.

### [Advantageous Effects of Invention]

A person detection system or the like according to the present disclosure has the advantage that it is possible to detect whether a person is present without preparing an additional device.

### [Brief Description of Drawings]

[FIG. 1]

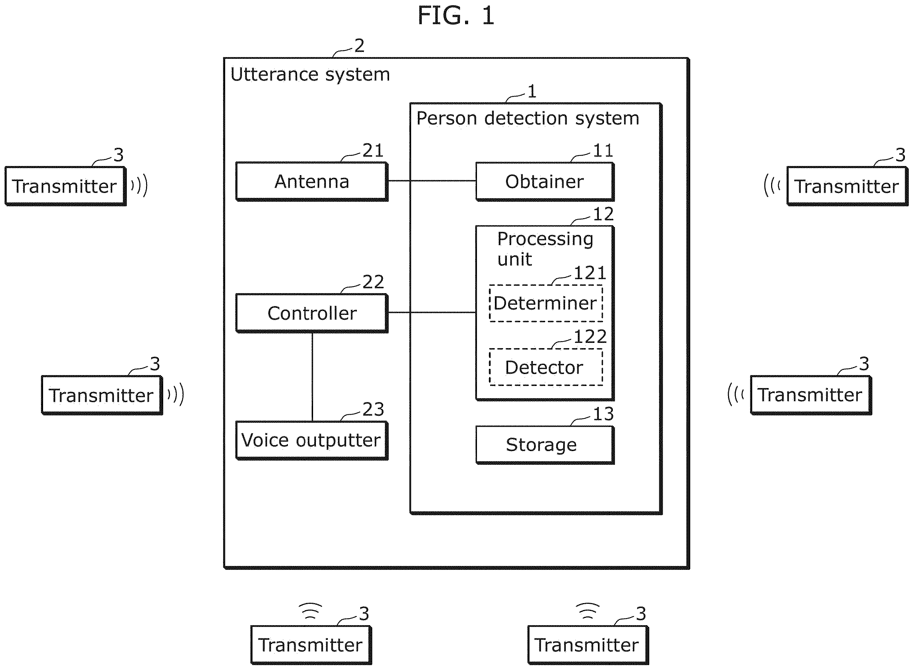

   FIG. 1 is a block diagram illustrating an overall configuration including a person detection system according to Embodiment 1.
[FIG. 2]

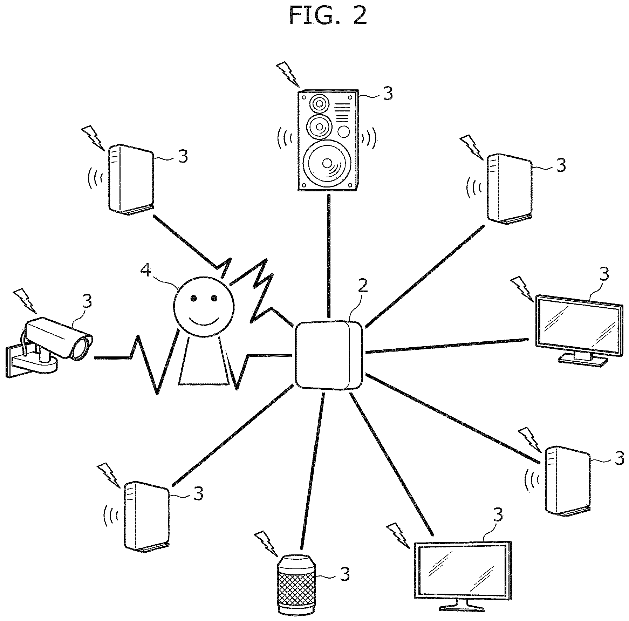

   FIG. 2 illustrates an environment in which an utterance system according to Embodiment 1 is provided.
[FIG. 3]

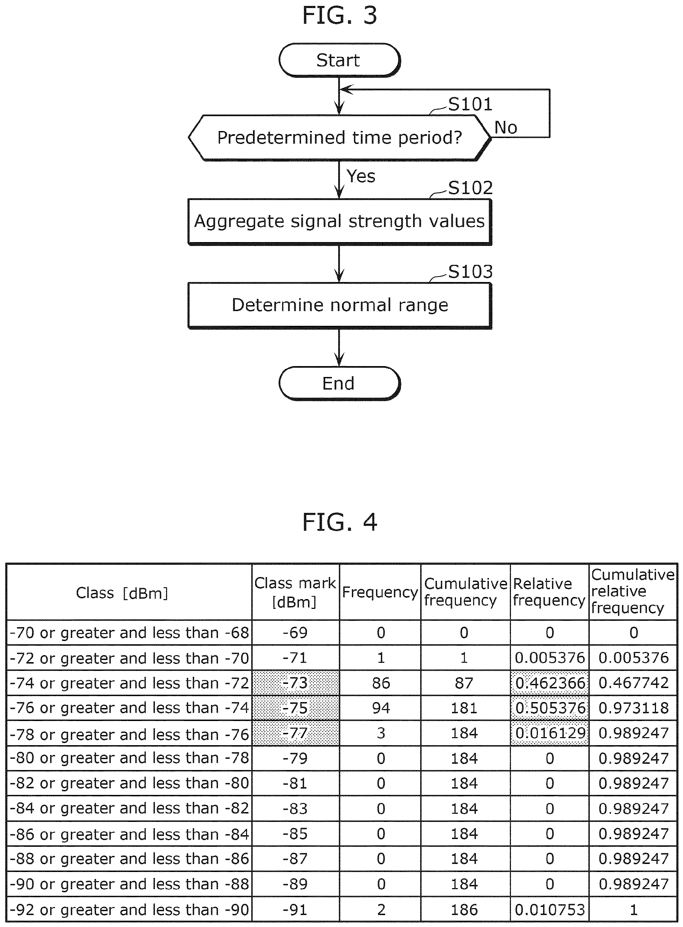

   FIG. 3 is a flowchart illustrating an example of a determination process in the person detection system according to Embodiment 1.
[FIG. 4]
   FIG. 4 illustrates an example of a normal range.
[FIG. 5]

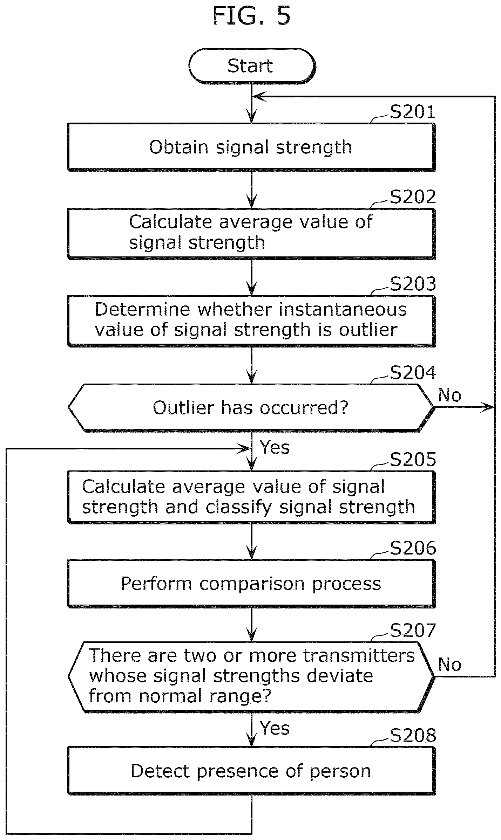

   FIG. 5 is a flowchart illustrating an operation example of the person detection system according to Embodiment 1.
[FIG. 6]

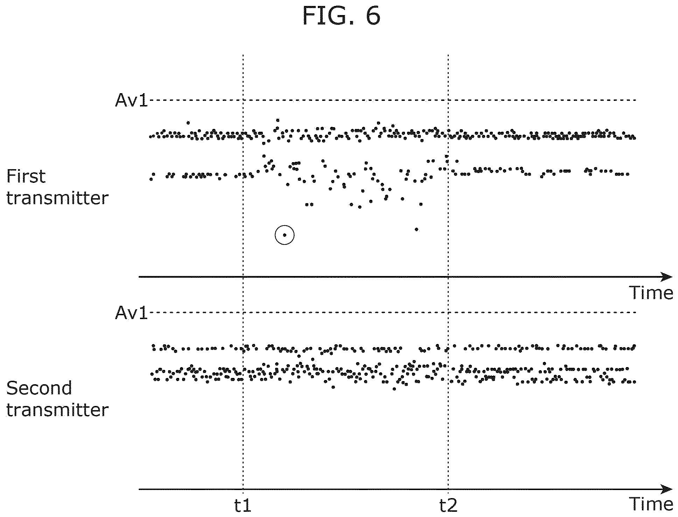

   FIG. 6 illustrates disturbance in signal strengths in a state where a person is present in the vicinity of an antenna.
[FIG. 7]

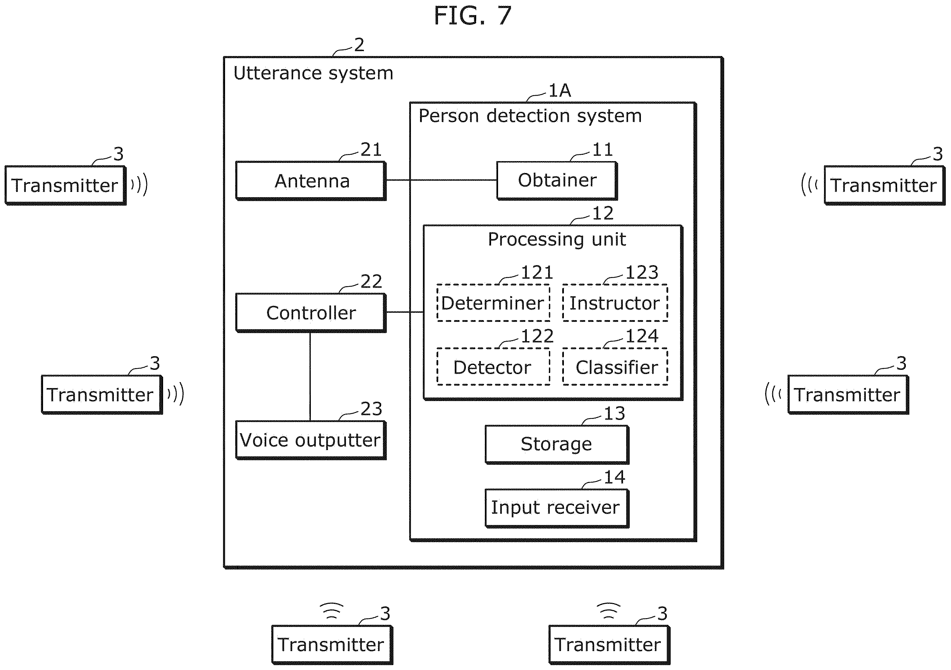

   FIG. 7 is a block diagram illustrating an overall configuration including a person detection system according to Embodiment 2.
[FIG. 8]

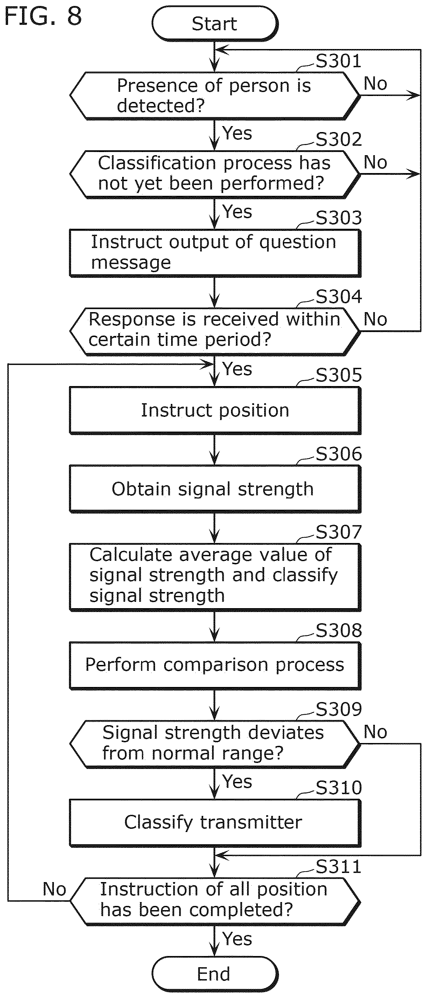

   FIG. 8 is a flowchart illustrating an example of a classification process in the person detection system according to Embodiment 2.
[FIG. 9]

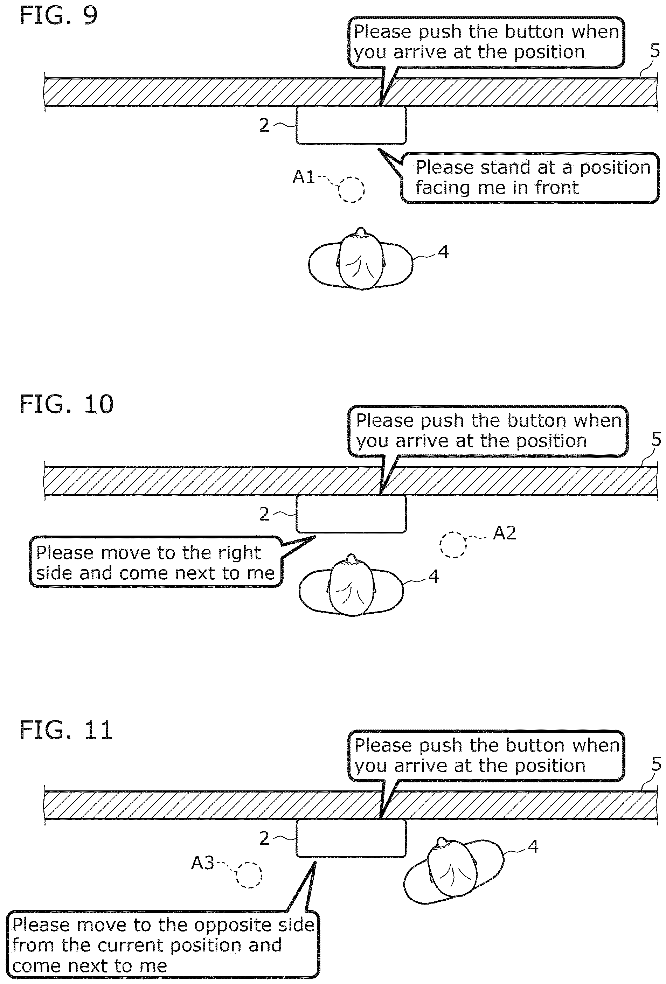

   FIG. 9 illustrates a first instruction to a person in the classification process.
[FIG. 10]
   FIG. 10 illustrates a second instruction to the person in the classification process.
[FIG. 11]
   FIG. 11 illustrates a third instruction to the person in the classification process.
[FIG. 12]

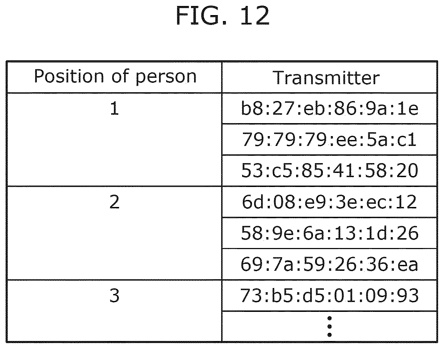

   FIG. 12 illustrates an example of classification information.
[FIG. 13]

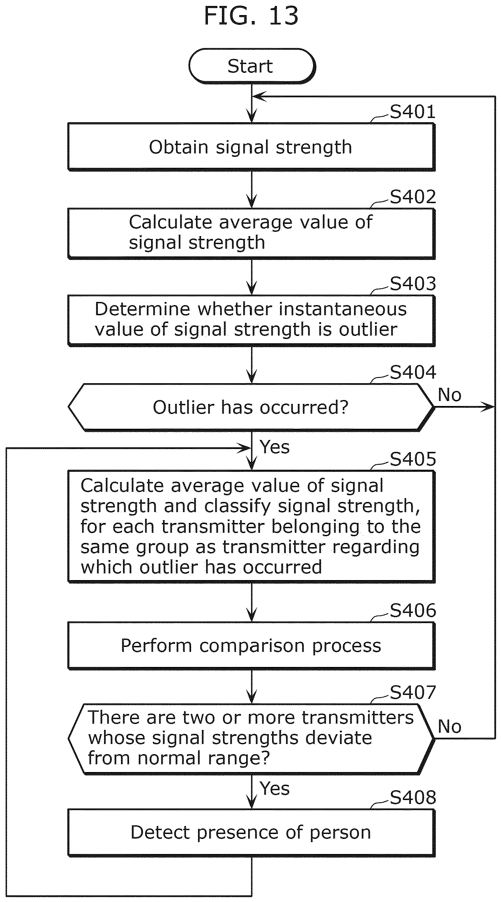

   FIG. 13 is a flowchart illustrating an operation example of the person detection system according to Embodiment 2.

### [Description of Embodiments]

### (Underlying Knowledge Forming Basis of the Present Disclosure)

The viewpoint of the inventors is described below.

Conventionally, there is a technique for causing a household device having a voice input/output function to make an utterance, by instructing the content and timing of the utterance to the household device. This technique is used for, for example, causing an utterance device (utterance system) having a voice input/output function to utter details of an event that has occurred in a home appliance, such as a washing machine, to thereby notify the details of the event to a user who is away from the home appliance. Examples of the event may include occurrence of some sort of error in the home appliance, completion of an operation performed by the home appliance, and the like.

However, there are cases where the user is away from the utterance device when the utterance device notifies the details of the event, such as when the user is out or is in a different place from an installation place of the utterance device, for example. In such a case, there is a problem that the user cannot notice the occurrence of the event since notification by the utterance device cannot reach the user, and thus the user cannot handle the event.

The above-described problem may be solved by causing the utterance device to notify the details of the event when the user is detected to be present in the vicinity of the utterance device. Here, for detecting whether the user is present in the vicinity of the utterance device, it can be considered that a sensor that detects a person is provided so that the vicinity of the utterance device is set as a detection range, for example. However, in this case, there is a problem that the cost increases because the sensor needs to be provided in addition to the utterance device.

Moreover, it can be considered that detection of whether the user is present in the vicinity of the utterance device is performed based on a signal strength of a radio wave transmitted from a mobile terminal, such as a smartphone, that is possessed by the user, for example. Since a signal strength of a radio wave that is received by the utterance device varies according to distance between the utterance device and the smartphone, it is possible to detect whether the user carrying the smartphone is present in the vicinity of the utterance device by causing the utterance device to measure a signal strength.

However, in this case, when the smartphone is left in the vicinity of the utterance device, there is a problem that the user is erroneously detected to be present in the vicinity of the utterance device even though the user is not actually present in the vicinity of the utterance device. Moreover, in this case, since a signal strength measured by the utterance device varies according to how the smartphone is held by the user, there is a problem that it is difficult to accurately detect whether the user is present in the vicinity of the utterance device by simply measuring a signal strength.

Other than above, it can be considered that a dedicated transmitter is provided in a space including the installation place of the utterance device, and detection of whether a user is present in the vicinity of the utterance device is performed by detecting attenuation of a radio wave caused by a human body when a user is present between the utterance device and the dedicated transmitter, for example. However, in this case, there is a problem that the cost increases because the dedicated transmitter needs to be provided in addition to the utterance device. Moreover, in this case, there is a problem that a range in which detection of whether a user is present can be performed varies according to the installation place of the dedicated transmitter because detection of whether a user is present is performed between the dedicated transmitter and the utterance device.

The present disclosure is conceived in view of the above.

Hereinafter, embodiments are described in detail with reference to the Drawings as necessary. However, there are instances where excessively detailed description is omitted. For example, details regarding known facts or duplicate explanation of two or more essentially identical configurations may be omitted. This is to make the following description easier for those skilled in the art to understand and avoid redundancy.

Note that the inventors provide the accompanying Drawings and the following description not to limit the scope of the claims, but to aid those skilled in the art to adequately understand the present disclosure.

### [Embodiment 1]

### [1-1. Overall Configuration]

First, an overall configuration including person detection system 1 according to Embodiment 1 and utterance system 2 including person detection system 1 is described with reference to FIG. 1 and FIG. 2. FIG. 1 is a block diagram illustrating the overall configuration including person detection system 1 according to Embodiment 1. FIG. 2 illustrates an environment in which utterance system 2 (person detection system 1) according to Embodiment 1 is provided.

Person detection system 1 is a system for detecting whether person 4 is present in the vicinity of utterance system 2, more specifically, antenna 21 included in utterance system 2. Here, although person 4 is assumed to be a user who uses utterance system 2, person 4 may be a person other than the user. In other words, person detection system 1 detects person 4 without identifying the attribute of person 4.

Here, as illustrated in FIG. 2, person detection system 1 is used in an environment in which utterance system 2 (more specifically, antenna 21) is provided and a plurality of transmitters 3 present around utterance system 2.

Transmitter 3 is a device that transmits a radio wave and provided inside or outside of a building in which the user lives. In other words, transmitter 3 may be a device, such as an information source device to be described later, possessed by the user or a device possessed by another person. For example, transmitter 3 is a device that performs a wireless communication in accordance with a wireless communication standard such as Wi-Fi (registered trademark) or Bluetooth (registered trademark) Low Energy (BLE). It is sufficient that transmitter 3 be a device that transmits a radio wave that can be received by antenna 21 of utterance system 2, and the function of transmitter 3 is not particularly limited. The examples of transmitter 3 may include an Internet of Things (IoT) device, a BLE device, and the like. More specifically, the examples of transmitter 3 may include a relay device such as a router, a beacon, a home appliance such as a television receiver or a smart speaker, a sensor, a surveillance camera, and the like.

Utterance system 2 is a system capable of notifying the user of details of an event that has occurred in an information source device or an information source service. Utterance system 2 notifies the details of the event by outputting voice from voice outputter 23 such as a loudspeaker, for example. It should be noted that notification by utterance system 2 may be performed by displaying text, an image, or the like on a display provided in utterance system 2, in addition to the outputting of voice.

Here, the information source device is a device that is a source of information to be notified by notification device 2. In Embodiment 1, the information source device is a home appliance. Specifically, the information source device is, for example, an air conditioning device, a washing machine, a robotic vacuum cleaner, a refrigerator, a rice cooker, a microwave oven, or the like. The examples of event that occurs in the information source device may include start or completion of an operation of the information source device, occurrence of an error in the information source device, maintenance of the information source device, and the like.

The information source service is a service that is a source of information to be notified by notification device 2 and, for example, is a service that is provided to the user from a server or the like operated by a service provider. The information source service is, for example, a transport service or a weather forecast service. The examples of an event that occurs in the information source service may include start or completion of a service by the information source service, occurrence of an error in the information source service, and the like.

In Embodiment 1, utterance system 2 is an utterance device having a voice output function as described above and is provided in a building in which the user lives, for example. In Embodiment 1, utterance system 2 is implemented as a dedicated device. It should be noted that utterance system 2 may be implemented as a function of a home appliance such as a smart speaker, a television receiver, a lighting appliance, a pet camera, an interphone master unit, an interphone sub unit, or an air conditioning device, for example.

Utterance system 2 includes person detection system 1, antenna 21, controller 22, and voice outputter 23. In Embodiment 1, utterance system 2 includes a processor and a memory, and controller 22 included in utterance system 2 is implemented by the processor executing a computer program stored in the memory.

Antenna 21 functions as part of a communication interface of utterance system 2. Antenna 21 receives a signal (radio wave) transmitted from the information source device or the information source service, via a network such as the Internet or a wireless local area network (LAN), for example. Moreover, antenna 21 receives radio waves transmitted from the plurality of transmitters 3. Specifically, when transmitter 3 is the information source device, antenna 21 receives a radio wave transmitted from the information source device to utterance system 2. When transmitter 3 is a device other than the information source device, antenna 21 receives a radio wave transmitted from transmitter 3. Utterance system 2 may include a single antenna 21 or a plurality of antennas 21.

When receiving a signal transmitted from the information source device or the information source service, controller 22 causes voice outputter 23 to output voice according to the content of the signal received. For example, controller 22 causes voice outputter 23 to output voice corresponding to voice data included in the signal received. When various voice data are stored in advance in the memory of utterance system 2, controller 22 may retrieve, from the memory, corresponding voice data in accordance with an instruction included in the signal received and then cause voice outputter 23 to output voice corresponding to the voice data retrieved. Moreover, when utterance system 2 has a function of automatically generating voice data, controller 22 may generate corresponding voice data in accordance with an instruction included in the signal received and then cause voice outputter 23 to output voice corresponding to the voice data generated.

In Embodiment 1, controller 22 causes voice outputter 23 to output voice when person 4 is detected to be present in the vicinity of antenna 21 by person detection system 1. In other words, even when receiving a signal transmitted from the information source device or the information source service, controller 22 does not control voice outputter 23 and stands by until when person detection system 1 detects that person 4 is present. Then, when person detection system 1 detects that person 4 is present, controller 22 causes voice outputter 23 to output voice.

Accordingly, since utterance system 2 according to Embodiment 1 can output voice only when person 4 is present around antenna 21 (utterance system 2), there is the advantage that content (e.g., details of an event that has occurred in the information source device or the information source service) indicated by the voice can be easily notified to person 4.

Voice outputter 23 outputs voice. In Embodiment 1, voice outputter 23 is a loudspeaker. Voice outputter 23 is controlled, by controller 22, to convert voice data transmitted from controller 22 into voice and output the voice converted.

### [1-2. Person Detection System]

Next, person detection system 1 is described in detail. As illustrated in FIG. 1, person detection system 1 includes obtainer 11, processing unit 12, and storage 13. Although person detection system 1 includes storage 13 in Embodiment 1, storage 13 need not be a constituent element of person detection system 1.

In Embodiment 1, person detection system 1 is installed inside a device including utterance system 2, and is a part of constituent elements of utterance system 2. It should be noted that person detection system 1 may be implemented as a device that is separate from utterance system 2, that is, person detection system 1 need not be a constituent element of utterance system 2.

Person detection system 1 includes a processor and a memory, and each of the constituent elements included in person detection system 1 is implemented by the processor executing a computer program stored in the memory. In Embodiment 1, the memory is storage 13.

Obtainer 11 obtains signal strengths of radio waves transmitted by the plurality of transmitters 3 and received by antenna 21. In Embodiment 1, obtainer 11 measures a received signal strength indicator (RSSI) value of a radio wave received by antenna 21 and obtains the RSSI value measured as a signal strength value. Moreover, obtainer 11 obtains an RSSI value from each of the plurality of transmitters 3. Specifically, obtainer 11 obtains RSSI values by distinguishing the RSSI values according to respective transmission source addresses included in radio waves transmitted from the plurality of transmitters 3. The RSSI values obtained by obtainer 11 are stored in storage 13 on a transmitter 3 basis. In Embodiment 1, obtainer 11 obtains, for each of the plurality of transmitters 3, a signal strength value at certain time intervals (e.g., at every several seconds).

Processing unit 12 performs a detection process of detecting whether person 4 is present in the vicinity of antenna 21, based on the signal strengths obtained by obtainer 11. In the detection process of Embodiment 1, processing unit 12 detects that person 4 is present in the vicinity of antenna 21 when each of the signal strengths obtained by obtainer 11 regarding, among the plurality of transmitters 3, two or more transmitters 3 deviates from a corresponding one of normal ranges. A normal range is a range in which a signal strength is generally constant, more specifically, a range of a signal strength measured in an environment in which person 4 is not present around antenna 21 (utterance system 2).

Here, the technique of detecting whether a person is present in the vicinity of antenna 21 by using person detection system 1 is described with reference to FIG. 2. As illustrated in FIG. 2, antenna 21 of utterance system 2 receives radio waves transmitted from the plurality of transmitters 3 present around utterance system 2. When person 4 is not present around utterance system 2, a signal strength of a radio wave transmitted from each of the plurality of transmitters 3 and received by antenna 21 is generally constant, that is, is in a corresponding one of the normal ranges since the radio waves transmitted from the plurality of transmitters 3 to antenna 21 are not attenuated by person 4.

When person 4 is present around utterance system 2, person 4 is present between utterance system 2 and any one or more of the plurality of transmitters 3. Here, when person 4 is present in the vicinity of one of the plurality of transmitters 3, person 4 is present only in the path of a radio wave transmitted from the one of the plurality of transmitters 3 and only the radio wave transmitted from the one of the plurality of transmitters 3 is disturbed by the presence of person 4. On the other hand, when person 4 is present in the vicinity of utterance system 2, person 4 is present in the paths of radio waves transmitted from two transmitters 3 located in a generally same direction as viewed from utterance system 2, among the plurality of transmitters 3, as illustrated in FIG. 2 for example, and both of the radio waves transmitted from the two transmitters 3 are disturbed by the presence of person 4.

Accordingly, when disturbance has occurred in each of radio waves transmitted from two or more transmitters 3 among the plurality of transmitters 3, person detection system 1 detects that person 4 is present in the vicinity of antenna 21. Person detection system 1 determines that a radio wave transmitted from transmitter 3 is disturbed due to the fact that a signal strength (RSSI value) of the radio wave deviates from a corresponding one of the normal ranges.

In Embodiment 1, processing unit 12 includes determiner 121 that performs a determination process of determining the above-described normal ranges and detector 122 that performs the above-described detection process. The function of determiner 121 is implemented by the processor executing a computer program that corresponds to determiner 121 and is stored in the memory. Moreover, the function of detector 122 is implemented by the processor executing a computer program that corresponds to detector 122 and is stored in the memory.

Determiner 121 performs the determination process. In other words, processing unit 12 performs the determination process of determining, for each of the plurality of transmitters 3, a normal range based on the signal strength obtained by obtainer 11 regarding the transmitter 3. The normal ranges determined by determiner 121 are stored in storage 13 on a transmitter 3 basis. In Embodiment 1, determiner 121 periodically performs the determination process as described later to thereby periodically update the normal ranges individually for each of the plurality of transmitters 3. Of course, determiner 121 may be triggered to perform the determination process when a predetermined operation is performed by the user of person detection system 1, to thereby irregularly update the normal ranges individually for each of the plurality of transmitters 3, for example.

Detector 122 performs the detection process. In Embodiment 1, detector 122 detects that person 4 is present in the vicinity of antenna 21 when each of the signal strengths obtained by obtainer 11 regarding, among the plurality of transmitters 3, two or more transmitters 3 is determined to deviate from a corresponding one of the normal ranges, by referring to the normal ranges determined by determiner 121.

### (2. Operations)

Hereinafter, operation of notification system 1 according to Embodiment 1 is described.

### [2-1. Determination Process]

First, a specific example of the determination process is described with reference to FIG. 3. FIG. 3 is a flowchart illustrating an example of the determination process in person detection system 1 according to Embodiment 1. Hereinafter, a description is given by focusing on a single transmitter 3 among a plurality of transmitters 3. A series of processes (S102 and S103) described below is performed for each of the plurality of transmitters 3.

First, determiner 121 obtains the present time by using a build-in or external timer and stands by until the present time reaches a predetermined time period (S101: No). Here, the predetermined time period is a time period in which it is assumed that person 4 is not present in a space where antenna 21, that is, utterance system 2 is present. For example, when the space where utterance system 2 is provided is a living room, a late-night time period in which it is assumed that person 4 is sleeping is set as the predetermined time period. Here, a time period from 1 a.m. to 5 a.m. is exemplified as the predetermined time period.

When the present time reaches the predetermined time period (S101: Yes), determiner 121 divides the predetermined time period by a certain time period (e.g., 10 minutes) and aggregates signal strength values obtained by obtainer 11 in each of the certain time periods (S102). Then, determiner 121 determines a normal range of transmitter 3 based on the aggregation result of the signal strength values (S103). The normal range determined by determiner 121 is stored in storage 13.

FIG. 4 illustrates an example of the normal range. In FIG. 4, "class" indicates each of ranges into which the range of the aggregated signal strength values is divided by a certain value (here, 2 dBm), and "class mark" indicates an average value of the signal strength values in a particular class. Moreover, in FIG. 4, "frequency" indicates the number of times a signal strength value belonging to a particular class is obtained. For example, the frequency of class "RSSI: -72 or greater and less than -70" is "1", and this means that, among the signal strength values obtained by obtainer 11 in the certain time period, the number of times a signal strength value in the range of class "RSSI: -72 or greater and less than -70" is obtained is 1. Moreover, in FIG. 4, "cumulative frequency" indicates the sum of frequencies of the class having the highest signal strength value and the subsequent class(es) up to and including a particular class. Furthermore, in FIG. 4, "relative frequency" indicates a value calculated by dividing frequency of a particular class by the total value of frequencies of all the classes, and "cumulative relative frequency" indicates the sum of relative frequencies of the class having the highest signal strength value and the subsequent class(es) up to and including a particular class

Here, an average value of the signal strength values (here, RSSI values) and convergence of the signal strength values are important for determining whether disturbance due to presence of person 4 has occurred in a radio wave transmitted from transmitter 3. In other words, since a signal strength is decreased when person 4 is present in the vicinity of antenna 21, it is important that the signal strength values in the normal range are relatively high. Moreover, since a signal strength varies when person 4 is present in the vicinity of antenna 21, it is important that the signal strength values in the normal range are converged.

Accordingly, in Embodiment 1, determiner 121 sorts the classes in the aggregation result of the signal strength values in descending order of the relative frequency, and calculates the sum of the highest relative frequency, the second highest relative frequency, and the third highest relative frequency. Then, determiner 121 determines that the signal strength values of the radio wave transmitted from transmitter 3 are relatively converged, that is, a first condition is satisfied when the sum of the highest three relative frequencies is 0.9 or greater, that is, when the sum of the highest three frequencies constitutes 90% or more of the frequencies of all the classes. Moreover, determiner 121 determines that the signal strength values of the radio wave transmitted from transmitter 3 are relatively high, that is, a second condition is satisfied when an average value of the class marks of these three classes having the highest three relative frequencies is a certain value (here, -80 dBm) or greater. Then, determiner 121 determines, as the normal range, the class marks of these three classes, the average value of the class marks of these three classes, and the sum of the relative frequencies of these three classes when the first condition and the second condition are satisfied.

In the example illustrated in FIG. 4, the class having the highest relative frequency is class "RSSI: -76 or greater and less than -74", the class having the second highest relative frequency is class "RSSI: -74 or greater and less than -72", and the class having the third highest relative frequency is class "RSSI: -78 or greater and less than -76". The sum of the relative frequencies of these three classes is "0.98" and the first condition is satisfied. Moreover, an average value of the class marks of these three classes is "-75" and the second condition is satisfied. Accordingly, determiner 121 determines the class marks of these three classes, the average value of the class marks of these three classes, and the sum of the relative frequencies of these three classes, as the normal range.

### [2-2. Detection Process]

Next, a specific example of the detection process is described with reference to FIG. 5. FIG. 5 is a flowchart illustrating an operation example of person detection system 1 according to Embodiment 1. Hereinafter, description is carried out under the assumption that normal ranges for a plurality of transmitters 3 are stored in advance in storage 13, by the determination process performed by determiner 121.

First, obtainer 11 obtains signal strength values of a radio wave transmitted from each of the plurality of transmitters 3 (S201). Then, detector 122 calculates, for each of the plurality of transmitters 3, an average value of the signal strength values obtained by obtainer 11 regarding the transmitter 3 (S202). Here, detector 122 calculates, for each of the plurality of transmitters 3, an average value of the signal strength values by performing an exponentially weighted moving average process on a past plurality (e.g., several tens) of data obtained by obtainer 11 regarding the transmitter 3.

Next, detector 122 determines, for each of the plurality of transmitters 3, whether an instantaneous value of a signal strength is an outlier by referring to the average value of the signal strength values calculated regarding the transmitter 3 (S203). In Embodiment 1, detector 122 determines that the instantaneous value of the signal strength is an outlier when the instantaneous value of the signal strength is attenuated to less than the average value and the deviation of the instantaneous value of the signal strength from the average value is several (e.g., three) times or more greater than the standard deviation.

When an outlier has not occurred regarding any of the plurality of transmitters 3 (S204: No), detector 122 does not perform the detection process and repeats steps S201 to S203. On the other hand, when an outlier has occurred regarding any of the plurality of transmitters 3 (S204: Yes), detector 122 performs the detection process and processes in step S205 and subsequent steps. In other words, processing unit 12 performs the detection process when an instantaneous value of a signal strength obtained by obtainer 11 regarding any one of the plurality of transmitters 3 is attenuated by a predetermined value or more.

In the detection process, detector 122 calculates, for each of the plurality of transmitters 3, an average value of a predetermined number of (e.g., 10) signal strength values obtained by obtainer 11 regarding the transmitter 3 and classifies the predetermined number of signal strength values into classes (S205). Then, detector 122 performs, for each of the plurality of transmitters 3, a comparison process of comparing the average value of the signal strength values calculated and the signal strength values classified with a corresponding one of the normal ranges (S206). Then, as a result of the comparison process, when there are two or more transmitters 3 regarding each of which a signal strength deviates from a corresponding one of the normal ranges (S207: Yes), detector 122 detects that person 4 is present in the vicinity of antenna 21 (S208). On the other hand, as a result of the comparison process, when there are less than two transmitters 3 regarding each of which a signal strength deviates from a corresponding one of the normal ranges (S207: No), detector 122 detects that person 4 is not present in the vicinity of antenna 21 and returns to step S201.

In the comparison process, for each of the plurality of transmitters 3, detector 122 detects that a signal strength deviates from a corresponding one of the normal ranges when a first determination condition, a second determination condition, and a third determination condition are satisfied. The first determination condition requires that the average value of signal strength values calculated be less than the average value of signal strength values in a corresponding one of the normal ranges. The second determination condition requires that at least one of the class marks of three classes having the highest three relative frequencies in the signal strength values classified does not match with any of the class marks of three classes having the highest three relative frequencies in a corresponding one of the normal ranges. The third determination condition requires that the total of the highest three relative frequencies in the signal strength values classified be less than or equal to a certain value (e.g., 0.8).

FIG. 6 illustrates disturbance in signal strengths in a state where person 4 is present in the vicinity of antenna 21. FIG. 6 illustrates an example in which disturbance has occurred in each of radio waves transmitted from a first transmitter and a second transmitter among the plurality of transmitters 3, due to presence of person 4 in the vicinity of antenna 21 in the time period from time t1 to time t2. FIG. 6 illustrates time series data of the signal strength values (here, RSSI values) of each of the radio waves transmitted from the first transmitter and the second transmitter.

In the example illustrated in FIG. 6, regarding each of the first transmitter and the second transmitter, the signal strength values are less than "Av1" which is the average value of signal strength values in a corresponding one of the normal ranges, and the distribution of the signal strength values is uneven compared with that in the normal range. Moreover, regarding the first transmitter, an outlier has occurred as indicated by a circle, among the signal strength values. In the example illustrated in FIG. 6, detector 122 is triggered to perform the detection process when the outlier has occurred regarding the first transmitter.

### [3. Advantages, etc.]

Hereinafter, the advantages of person detection system 1 (person detection method) according to Embodiment 1 are described.

As described above, for detecting whether person 4 such as a user or the like is present in the vicinity of an utterance device (utterance system 2), it can be considered that a sensor that detects a person or a dedicated transmitter is provided in a space including the installation place of utterance system 2, for example. However, in this case, there is a problem that the cost increases because another device needs to be prepared in addition to the utterance device.

Alternatively, for example, it can be considered that a mobile terminal, such as a smartphone, that is possessed by person 4 is used. In this case, since the mobile terminal possessed by person 4 is used, there is no need to prepare another device in addition to the utterance device. However, there is a problem that it is difficult to accurately detect whether person 4 is present in the vicinity of utterance system 2.

In contrast, person detection system 1 (person detection method) according to Embodiment 1 uses signal strengths of radio waves transmitted from a plurality of preexisting transmitters 3 around antenna 21 (utterance system 2) to detect whether person 4 is present in the vicinity of antenna 21 (utterance system 2). Accordingly, in person detection system 1 (person detection method) according to Embodiment 1, there is no need to prepare another device in addition to utterance system 2, unlike the case in which a sensor that detects a person or a dedicated transmitter is used. Moreover, in person detection system 1 (person detection method) according to Embodiment 1, it is possible to easily detect whether person 4 is present in the vicinity of utterance system 2 since the position of a device which is a transmission source of a radio wave is fixed, unlike the case in which a mobile terminal is used. Accordingly, person detection system 1 (person detection method) according to the embodiment has the advantage that it is possible to detect whether person 4 is present without preparing an additional device.

### (Embodiment 2)

### [1. Configuration]

Hereinafter, person detection system 1A according to Embodiment 2 is described with reference to FIG. 7. FIG. 7 is a block diagram illustrating the overall configuration including person detection system 1A according to Embodiment 2. Person detection system 1A is different from person detection system 1 according to Embodiment 1 in that person detection system 1A further includes input receiver 14. Moreover, person detection system 1A is different from person detection system 1 according to Embodiment 1 in that processing unit 12 of person detection system 1A further includes instructor 123 and classifier 124. Hereinafter, a description of points in common with person detection system 1 according to Embodiment 1 are omitted.

Input receiver 14 is, for example, a push button or the like that is exposed to the outside of a housing accommodating utterance system 2, and receives an input by person 4. When person 4 present around antenna 21 (utterance system 2) is instructed by voice, person 4 uses input receiver 14 to respond the instruction.

Instructor 123 gives various instructions to person 4 present around antenna 21 (utterance system 2). Specifically, instructor 123 transmits, to controller 22 of utterance system 2, an instruction signal including content of an instruction to person 4. Accordingly, controller 22 causes voice outputter 23 to output, by voice, the content of the instruction included in the instruction signal. The function of instructor 123 is implemented by a processor executing a computer program that corresponds to instructor 123 and is stored in a memory.

Classifier 124 (i.e., processing unit 12) performs a classification process of classifying each of a plurality of transmitters 3 into any one of a plurality of groups according to a position of the transmitter 3 with respect to antenna 21. Specifically, classifier 124 classifies, among the plurality of transmitters 3, two or more transmitters 3 located in a generally same direction as viewed from antenna 21 (utterance system 2) into the same group, by performing the classification process. Classification information related to the groups classified by classifier 124 is stored in storage 13. In Embodiment 2, classifier 124 performs the classification process when the classification process has not yet been performed, as described later. Classifier 124 may update the classification information by performing the classification process when the classification process has already been performed. The function of classifier 124 is implemented by the processor executing a computer program that corresponds to classifier 124 and is stored in the memory.

Then, in Embodiment 2, a detection process by detector 122 is different from the detection process in person detection system 1 according to Embodiment 1. Specifically, in the detection process of Embodiment 2, detector 122 (i.e., processing unit 12) detects that person 4 is present in the vicinity of antenna 21 (utterance system 2) when each of the signal strengths obtained by obtainer 11 regarding, among the plurality of transmitters 3, two or more transmitters 3 classified into the same group deviates from a corresponding one of normal ranges.

In other words, in Embodiment 2, for example, even when each of the signal strengths obtained by obtainer 11 regarding two or more transmitters 3 deviates from a corresponding one of the normal ranges, detector 122 detects that person 4 is not present in the vicinity of antenna 21 when the two or more transmitters 3 belong to mutually different groups, that is, are located in mutually different directions as viewed from antenna 21.

It should be noted that in a case where storage 13 does not store the classification information, that is, in a case where classifier 124 has not yet performed the classification process, detector 122 detects that person 4 is present in the vicinity of antenna 21 when each of the signal strengths obtained by obtainer 11 regarding, among the plurality of transmitters 3, two or more transmitters 3 deviates from a corresponding one of the normal ranges, as with Embodiment 1.

### [2. Operations]

Hereinafter, operation of person detection system 1A according to Embodiment 2 is described.

### [2-1. Classification Process]

First, a specific example of the classification process is described with reference to FIG. 8. FIG. 8 is a flowchart illustrating an example of the classification process in person detection system 1A according to Embodiment 2.

When detector 122 detects that person 4 is present in the vicinity of antenna 21 (S301: Yes) and the classification process has not yet been performed (S302: Yes), instructor 123 transmits an instruction signal to controller 22 of utterance system 2 to thereby instruct output of a question message (S303). Accordingly, controller 22 causes voice outputter 23 to output the question message by voice. The question message is a message for inquiring of person 4 whether to perform the classification process. The question message includes a message for instructing person 4 to perform an operation on an utterance device (utterance system 2) when the classification process is allowed to be performed. On the other hand, when person 4 is not detected to be present in the vicinity of antenna 21 by detector 122 (S301: No) or when the classification process has already been performed (S302: No), instructor 123 does not do anything particular.

Processing unit 12 waits for a response to the question message from person 4 for a certain time period (e.g., several tens of seconds) from when the question message is outputted by voice. Then, when processing unit 12 receives the response within the certain time period by receiving an input by person 4 by input receiver 14 (S304: Yes), classifier 124 performs the classification process and the processes in step S305 and the subsequent steps described later. On the other hand, when processing unit 12 does not receive the response within the certain time period (S304: No), classifier 124 does not do anything particular.

In the classification process, processing unit 12 causes instructor 123 to instruct the standing position of person 4 (S305). Instructor 123 transmits an instruction signal to controller 22 of utterance system 2 to thereby instruct output of a position instruction message. Accordingly, controller 22 causes voice outputter 23 to output the position instruction message by voice. The position instruction message is a message for requiring person 4 to move to a predetermined standing position. The position instruction message includes a message for instructing person 4 to perform an operation on the utterance device (utterance system 2) when person 4 has arrived at the predetermined standing position.

After person 4 has arrived at the predetermined standing position, obtainer 11 obtains, for each of the plurality of transmitters 3, a predetermined number of (e.g., 10) signal strength values (S306). Next, classifier 124 calculates, for each of the plurality of transmitters 3, an average value of the predetermined number of signal strength values obtained by obtainer 11 regarding the transmitter 3 and classifies the predetermined number of signal strength values into classes (S307). Then, classifier 124 performs, for each of the plurality of transmitters 3, a comparison process of comparing the average value of the signal strength values calculated and the signal strength values classified with a corresponding one of the normal ranges (S308). The comparison process is the same as that in Embodiment 1 and the description thereof is omitted here.

Then, as a result of the comparison process, when there are one or more transmitters 3 regarding each of which a signal strength deviates from a corresponding one of the normal ranges (S309: Yes), classifier 124 classifies the one or more transmitters 3 into a group corresponding to the predetermined standing position (S310). On the other hand, as a result of the comparison process, when there is no transmitter 3 regarding which a signal strength deviates from a corresponding one of the normal ranges (S309: No), classifier 124 does not do anything particular.

Thereafter, until processing unit 12 completes instructing person 4 to move to all of standing positions (S311: No), processing unit 12 repeats a series of processes in steps S305 to S310 while changing the standing position of person 4. Then, when processing unit 12 has instructed person 4 to move to all of the standing positions (S311: Yes), processing unit 12 completes the classification process. Classification information related to the groups classified by classifier 124 is stored in storage 13.

It should be noted that when the classification process has been completed, instructor 123 may transmit an instruction signal to controller 22 of utterance system 2 to thereby instruct output of a completion message. Accordingly, controller 22 causes voice outputter 23 to output the completion message by voice. The completion message is a message for informing person 4 of completion of the classification process.

Here, a specific example of an instruction of the standing position of person 4 in the classification process is described with reference to FIG. 9 to FIG. 11. FIG. 9 illustrates a first instruction to person 4 in the classification process. FIG. 10 illustrates a second instruction to person 4 in the classification process. FIG. 11 illustrates a third instruction to person 4 in the classification process. In the example illustrated in FIG. 9 to FIG. 11, it is assumed that an utterance device (utterance system 2) is provided on wall 5.

As illustrated in FIG. 9, in the first instruction, person 4 is instructed to stand at first position A1 that is in front of the utterance device (utterance system 2). Specifically, in the first instruction, voice outputter 23 outputs by voice, as the position instruction message, the message "Please stand at a position facing me in front" for prompting a movement to first position A1 and the message "Please push the button when you arrive at the position" for prompting an operation when the movement has been completed. In response to the first instruction, person 4 moves to first position A1 and performs an input operation on the utterance device (utterance system 2).

As illustrated in FIG. 10, in the second instruction, person 4 is instructed to stand at second position A2 that is on the right side as viewed from person 4, that is, on the front left side as viewed from the utterance device (utterance system 2). Specifically, in the second instruction, voice outputter 23 outputs by voice, as the position instruction message, the message "Please move to the right side and come next to me" for prompting a movement to second position A2 and the message "Please push the button when you arrive at the position" for prompting an operation when the movement has been completed. In response to the second instruction, person 4 moves from first position A1 to second position A2 and performs an input operation on the utterance device (utterance system 2).

As illustrated in FIG. 11, in the third instruction, person 4 is instructed to stand at third position A3 that is on the left side as viewed from person 4, that is, on the front right side as viewed from the utterance device (utterance system 2). Specifically, in the third instruction, voice outputter 23 outputs by voice, as the position instruction message, the message "Please move to the opposite side from the current position and come next to me" for prompting a movement to third position A3 and the message "Please push the button when you arrive at the position" for prompting an operation when the movement has been completed. In response to the third instruction, person 4 moves from second position A2 to third position A3 and performs an input operation on the utterance device (utterance system 2).

FIG. 12 illustrates an example of the classification information. In FIG. 12, "position of person" indicates a standing position of person 4 during execution of the classification process. Specifically, "1", "2", and "3" in "position of person" indicate that person 4 is standing at first position A1, second position A2, and third position A3, respectively. Moreover, in FIG. 12, "transmitter" indicates an address of transmitter 3. Accordingly, in the example illustrated in FIG. 12, the classification information includes data indicating that a plurality of transmitters 3 belong to a group corresponding to first position A1, a plurality of transmitters 3 belong to a group corresponding to second position A2, and a plurality of transmitters 3 belong to a group corresponding to third position A3.

### [2-2. Detection Process]

Next, a specific example of the detection process is described with reference to FIG. 13. FIG. 13 is a flowchart illustrating an operation example of person detection system 1A according to Embodiment 2. It should be noted that, in the detection process described below, steps S401 to S404 are the same as steps S201 to S204 in the detection process of embodiment 1 (see FIG. 5) and the description thereof is omitted here.

In the detection process, detector 122 refers to the classification information and identifies a plurality of transmitters 3 belonging to the same group as transmitter 3 regarding which an outlier has occurred. Then, detector 122 calculates, for each of the plurality of transmitters 3 belonging to the same group as transmitter 3 regarding which an outlier has occurred, an average value of a predetermined number of (e.g., 10) signal strength values obtained by obtainer 11 regarding the transmitter 3 and classifies the predetermined number of signal strength values into classes (S405). Then, detector 122 performs, for each of the plurality of transmitters 3 of the above-described same group, a comparison process of comparing the average value of the signal strength values calculated and the signal strength values classified with a corresponding one of the normal ranges (S406). The comparison process is the same as the comparison process in Embodiment 1 and the description thereof is omitted here.

Then, as a result of the comparison process, when there are two or more transmitters 3 regarding each of which a signal strength deviates from a corresponding one of the normal ranges (S407: Yes), detector 122 detects that person 4 is present in the vicinity of antenna 21 (S408). On the other hand, as a result of the comparison process, when there are less than two transmitters 3 regarding which a signal strength deviates from a corresponding one of the normal ranges (S407: No), detector 122 detects that person 4 is not present in the vicinity of antenna 21 and returns to step S401.

### [3. Advantages]

Hereinafter, the advantages of person detection system 1A (person detection method) according to Embodiment 2 are described, compared with person detection system 1 according to Embodiment 1. It should be noted that, among the advantages of person detection system 1A (person detection method) according to Embodiment 2, a description of points in common with person detection system 1 according to Embodiment 1 is omitted.

In person detection system 1 according to Embodiment 1, since it is impossible to refer to classification information, it is impossible to detect in which directions the plurality of transmitters 3 are individually located with respect to the utterance device (utterance system 2). Therefore, in person detection system 1 according to Embodiment 1, when disturbance has occurred in radio waves transmitted from two or more transmitters 3 due to presence of a person in the vicinity of the two or more transmitters 3, for example, person 4 may be erroneously detected to be present in the vicinity of antenna 21 (utterance system 2).

In contrast, in person detection system 1A (person detection method) according to Embodiment 2, it is possible to detect in which directions the plurality of transmitters 3 are individually located with respect to the utterance device (utterance system 2), by referring to classification information. Therefore, in person detection system 1A (person detection method) according to Embodiment 2, there is the advantage that it is possible to reduce the probability that person 4 is erroneously detected to be present in the vicinity of antenna 21 (utterance system 2) when disturbance has occurred in radio waves transmitted from two or more transmitters 3 due to presence of a person in the vicinity of the two or more transmitters 3, for example.

### (Variation)

Embodiments 1 and 2 have been described as exemplifications of the technique disclosed in the present application as above. However, the technique in the present disclosure is not limited to the foregoing embodiment, and modifications, interchanges, additions, omissions, etc., to the embodiment can be applied as appropriate. Moreover, various constituent elements described in Embodiments 1 and 2 may be combined to achieve a new embodiment.

In view of this, variations of Embodiments 1 and 2 are exemplified below.

In Embodiment 2, detector 122 performs, for each of the plurality of transmitters 3 belonging to the same group as transmitter 3 regarding which an outlier has occurred, steps S405 and S406 in the detection process; however, this example is not limiting. For example, when there are a large number of transmitters 3 belonging to the same group as transmitter 3 regarding which an outlier has occurred, detector 122 may perform steps S405 and S406 only for a plurality of reliable transmitters 3 regarding each of which a relatively high signal strength is obtained by obtainer 11.

In each of Embodiments 1 and 2, detector 122 is triggered to perform the detection process when an outlier has occurred regarding any of the plurality of transmitters 3; however, this example is not limiting. For example, detector 122 may perform the detection process constantly without performing the process of determining occurrence of an outlier.

Although utterance system 2 and the information source device are separate devices in each of Embodiments 1 and 2, this example is not limiting. For example, the information source device may also serve as utterance system 2. As an example, when there are a plurality of information source devices and an event has occurred in one of the plurality of information source devices, another one of the plurality of information source devices, which is different from the information source device in which the event has occurred, may function as notification device 2.

In each of Embodiments 1 and 2, person detection systems 1 and 1A are each used in combination with utterance system 2; however, this example is not limiting. For example, person detection systems 1 and 1A may each be used in combination with an air conditioning device such as an air conditioner or a lighting device. In the former case, the air conditioning device can start an air conditioning operation when person detection system 1 or 1A detects that a person is present in the vicinity of the air conditioning device, and stop the air conditioning operation when person detection system 1 or 1A detects that a person is not present in the vicinity of the air conditioning device. In the latter case, the lighting device can turn on a light when person detection system 1 or 1A detects that a person is present in the vicinity of the lighting device, and can turn off the light when person detection system 1 or 1A detects that a person is not present in the vicinity of the lighting device.

Furthermore, for example, in Embodiments 1 and 2, a part or all of the constituent elements of each of person detection systems 1 and 1A of the present disclosure may be configured of dedicated hardware, or may be implemented by executing a software program suitable for each of the constituent elements. each of the constituent elements may be implemented by a program executor, such as a central processing unit (CPU) or a processor, retrieving and executing a software program stored in a storage medium, such as a hard disk drive (HDD) or a semiconductor memory device.

Moreover, the constituent elements of each of person detection systems 1 and 1A of the present disclosure may be configured of one or more electronic circuits. The one or more electronic circuits may be ordinary circuits or dedicated circuits.

The one or more electronic circuits may include, for example, a semiconductor device, an integrated circuit (IC), or a large scale integration (LSI). The IC or the LSI may be integrated on a single chip or a combination of a plurality of chips. Here, the one or more electronic circuits are referred to as an IC or an LSI, but may also be referred to as a system LSI, a very large scale integration (VLSI), or an ultra large scale integration (ULSI), depending on the scale of integration. Furthermore, a field programmable gate array (FPGA) that is programmed after an LSI is manufactured may also be used for the same purpose.

Furthermore, general or specific aspects of the present disclosure may be realized as a system, a device, a method, an integrated circuit, or a computer program. Alternatively, general or specific aspects of the present disclosure may be realized as a non-transitory computer-readable recording medium, such as an optical disk, an HDD, or a semiconductor memory device, in which the computer program is stored. For example, the present disclosure may be realized as a program for causing a computer to execute a person detection method according to Embodiment 1 or 2. Furthermore, the program may be stored in a non-transitory computer-readable recording medium such as a CD-ROM, or may be distributed via a communication path such as the Internet.

Hereinbefore, each of the embodiments has been described as an exemplification of the technique of the present disclosure. To this extent, the accompanying drawings and detailed description are provided.

Therefore, the constituent elements described in the accompanying drawings and detailed description may include, not only constituent elements essential to solving the problem, but also constituent elements that are not essential to solving the problem but are included in order to exemplify the aforementioned technique. Those unnecessary constituent elements should not be deemed essential due to the mere fact that they are described in the accompanying drawings and the detailed description.

Moreover, the embodiments above show examples of techniques according to the present disclosure. Thus, various modifications, replacements, additions, omissions, or the like can be made within the scope of the claims or in a scope equivalent to the scope of the claims.

### (Conclusion)

As described above, person detection system 1A according to the embodiment includes obtainer 11 and processing unit 12. Obtainer 11 obtains a signal strength of a radio wave transmitted by each of a plurality of transmitters 3 and received by antenna 21. Processing unit 12 performs a detection process of detecting whether person 4 is present in a vicinity of antenna 21, based on the signal strengths obtained by obtainer 11. Each of the plurality of transmitters 3 is classified into any one of a plurality of groups according to a position of the transmitter 3 with respect to antenna 21. In the detection process, processing unit 12 detects that person 4 is present in the vicinity of antenna 21 when each of the signal strengths obtained by obtainer 11 regarding, among the plurality of transmitters 3, two or more transmitters 3 deviates from a normal range.

Accordingly, there is the advantage that it is possible to detect whether person 4 is present without preparing an additional device. Moreover, there is the advantage that it is possible to reduce the probability that person 4 is erroneously detected to be present in the vicinity of antenna 21 when disturbance has occurred in radio waves transmitted from two or more transmitters 3 due to presence of a person in the vicinity of the two or more transmitters 3, for example.

Furthermore, for example, in person detection system 1A, processing unit 12 has a function of performing a classification process of classifying each of the plurality of transmitters 3 into any one of the plurality of groups according to the position of the transmitter 3 with respect to antenna 21.

Accordingly, there is the advantage that it is possible to classify each of the plurality of transmitters 3 by performing the classification process when each of the plurality of transmitters 3 has not yet been classified into any one of the plurality of groups. Moreover, there is the advantage that it is possible to update information related to each of the plurality of transmitters 3 classified, by performing the classification process.

Furthermore, for example, in each of person detection systems 1 and 1A, processing unit 12 has a function of performing a determination process of determining, for each of the plurality of transmitters 3, the normal range based on the signal strength obtained by obtainer 11 regarding the transmitter 3.

Accordingly, there is the advantage that it is possible to determine the respective normal ranges for the plurality of transmitters 3 by performing the determination process when the respective normal ranges have not yet been determined for the plurality of transmitters 3. Moreover, there is the advantage that it is possible to update the respective normal ranges for the plurality of transmitters 3 by performing the determination process.

Furthermore, for example, in each of person detection systems 1 and 1A, processing unit 12 performs the detection process when an instantaneous value of the signal strength obtained by obtainer 11 regarding any one of the plurality of transmitters 3 is attenuated by a predetermined value or more.

Accordingly, there is the advantage that disturbance in a radio wave transmitted from transmitter 3 can be easily detected by performing the detection process when an instantaneous value of a signal strength is attenuated by the predetermined value or more, that is, when an outlier has occurred, as a trigger.

Moreover, person detection system 1 according to the embodiment includes obtainer 11 and processing unit 12. Obtainer 11 obtains a signal strength of a radio wave transmitted by each of a plurality of transmitters 3 and received by antenna 21. Processing unit 12 performs a detection process of detecting whether person 4 is present in a vicinity of antenna 21, based on the signal strengths obtained by obtainer 11. In the detection process, processing unit 12 detects that person 4 is present in the vicinity of antenna 21 when each of the signal strengths obtained by obtainer 11 regarding, among the plurality of transmitters 3, two or more transmitters 3 deviates from a normal range.

Accordingly, there is the advantage that it is possible to detect whether person 4 is present without preparing an additional device.

Moreover, utterance system 2 according to the embodiment includes person detection system 1 or 1A, antenna 21, voice outputter 23, and controller 22. Voice outputter 23 outputs voice. Controller 22 causes voice outputter 23 to output the voice when person detection system 1 or 1A detects that person 4 is present in the vicinity of antenna 21.

Accordingly, since voice can be outputted only when person 4 is present around antenna 21, there is the advantage that content (e.g., details of an event that has occurred in an information source device or an information source service) indicated by the voice can be easily notified to person 4.

Moreover, a person detection method according to the embodiment obtains a signal strength of a radio wave transmitted by each of a plurality of transmitters 3 and received by antenna 21. Moreover, the person detection method performs a detection process of detecting whether person 4 is present in a vicinity of antenna 21, based on the signal strengths obtained. Each of the plurality of transmitters 3 is classified into any one of a plurality of groups according to a position of the transmitter 3 with respect to antenna 21. In the detection process, the person detection method detects that person 4 is present in the vicinity of antenna 21 when each of the signal strengths obtained regarding, among the plurality of transmitters 3, two or more transmitters 3 classified into a same group among the plurality of groups deviates from a normal range.

Accordingly, there is the advantage that it is possible to detect whether person 4 is present without preparing an additional device. Moreover, there is the advantage that it is possible to reduce the probability that person 4 is erroneously detected to be present in the vicinity of antenna 21 when disturbance has occurred in each of radio waves transmitted from two or more transmitters 3 due to presence of a person in the vicinity of the two or more transmitters 3, for example.

Moreover, a program according to the embodiment causes one or more processors to execute the person detection method.

Accordingly, there is the advantage that it is possible to detect whether person 4 is present without preparing an additional device. Moreover, there is the advantage that it is possible to reduce the probability that person 4 is erroneously detected to be present in the vicinity of antenna 21 when disturbance has occurred in each of radio waves transmitted from two or more transmitters 3 due to presence of a person in the vicinity of the two or more transmitters 3, for example.

### [Industrial Applicability]

The present disclosure is applicable to a system or the like that is triggered to operate by presence of a person.

### [Reference Signs List]

- 1, 1A: person detection system
- 11: obtainer
- 12: processing unit
- 121: determiner
- 122: detector
- 123: instructor
- 124: classifier
- 13: storage
- 14: input receiver
- 2: utterance system
- 21: antenna
- 22: controller
- 23: voice outputter
- 3: transmitter
- 4: person
- 5: wall
- A1: first position
- A2: second position
- A3: third position
- Av1: average value of signal strength values
- t1, t2: time

## Claims

1. A person detection system comprising:
an obtainer that obtains a signal strength of a radio wave transmitted by each of a plurality of transmitters and received by an antenna; and
a processing unit that performs a detection process of detecting whether a person is present in a vicinity of the antenna, based on the signal strengths obtained by the obtainer, wherein
each of the plurality of transmitters is classified into any one of a plurality of groups according to a position of the transmitter with respect to the antenna, and
in the detection process, the processing unit detects that the person is present in the vicinity of the antenna when each of the signal strengths obtained by the obtainer regarding, among the plurality of transmitters, two or more transmitters classified into a same group among the plurality of groups deviates from a normal range.

2. The person detection system according to claim 1, wherein
the processing unit has a function of performing a classification process of classifying each of the plurality of transmitters into any one of the plurality of groups according to the position of the transmitter with respect to the antenna.

3. The person detection system according to claim 1 or 2, wherein
the processing unit has a function of performing a determination process of determining, for each of the plurality of transmitters, the normal range based on the signal strength obtained by the obtainer regarding the transmitter.

4. The person detection system according to claim 1 or 2, wherein
the processing unit performs the detection process when an instantaneous value of the signal strength obtained by the obtainer regarding any one of the plurality of transmitters is attenuated by a predetermined value or more.

5. A person detection system comprising:
an obtainer that obtains a signal strength of a radio wave transmitted by each of a plurality of transmitters and received by an antenna; and
a processing unit that performs a detection process of detecting whether a person is present in a vicinity of the antenna, based on the signal strengths obtained by the obtainer, wherein
in the detection process, the processing unit detects that the person is present in the vicinity of the antenna when each of the signal strengths obtained by the obtainer regarding, among the plurality of transmitters, two or more transmitters deviates from a normal range.

6. An utterance system comprising:
the person detection system according to any one of claims 1, 2, or 5;
the antenna;
a voice outputter that outputs voice; and
a controller that causes the voice outputter to output the voice when the person detection system detects that the person is present in the vicinity of the antenna.

7. A person detection method comprising:
obtaining a signal strength of a radio wave transmitted by each of a plurality of transmitters and received by an antenna; and
performing a detection process of detecting whether a person is present in a vicinity of the antenna, based on the signal strengths obtained, wherein
each of the plurality of transmitters is classified into any one of a plurality of groups according to a position of the transmitter with respect to the antenna, and
in the detection process, the person is detected to be present in the vicinity of the antenna when each of the signal strengths obtained regarding, among the plurality of transmitters, two or more transmitters classified into a same group among the plurality of groups deviates from a normal range.

8. A program for causing one or more processors to execute the person detection method according to claim 7.
